# EUROPEAN PATENT APPLICATION

(11) **EP 1 629 901 A1**
(43) Date of publication of application: **01.03.2006**
(21) Application number: 03721025.9
(22) Date of filing: 06.05.2003
(51) Int. Cl.: B05D 3/08, B05D 7/24, C08J 7/00

(54) **METHOD FOR SURFACE PREPARATION OF SOLID SUBSTANCES AND SURFACE-PREPARED SOLID SUBSTANCES**

(71) Applicant: Mori, Yasuhiro, Koto-ku, Tokyo 135-0042 (JP)
(72) Inventor: Mori, Yasuhiro, Koto-ku, Tokyo 135-0042 (JP)
(74) Representative: Hoffmann, Eckart
(86) International application number: PCT/JP2003/005650
(87) International publication number: WO 2004/098792

(57) **Abstract**

A method for modifying the surface of a solid material and a surface-modified solid material are provided, where an excellent adhesion strength between the surface of the solid material and any of coating films made of various UV-curing resins or the like can be obtained. In other words, it is attained by carrying out a silicatizing flame treatment on the surface of the solid material by wholly or partially blowing a flame of a fuel gas containing a specific silicon-containing compound having a flash point of 0 to 100°C and a boiling point of 105 to 250°C, such as hexamethyldisilazane, vinyltrimethoxysilane, trifuloropropyl trimethoxysilane, 3-chloropropyl trimethoxysilane.

## Description

### TECHNICAL FIELD

The present invention relates to a method for modifying the surface of a solid material and a surface-modified solid material. More specifically, the present invention relates to a method for modifying the surface of a solidmaterial, which can exert an excellent modifying effect on any coating film made of any kind of a UV-hardening resin or the like and to a surface-modified solid material obtained by such a method.

### BACKGROUND TECHNOLOGY

Many of films or molded products made of solid materials, such as silicone rubber, fluorine-containing rubber, and polyethylene resin, have hydrophobic or water-repellent surfaces, so that they can be usually difficult to be attached to other members or to be subjected to surface treatments including adhesion printing and UV-coating. In addition, solid materials having metallic surfaces made of metals such as stainless steel and magnesium have problems in that they have the poor adhesion strength and surface-smoothness in comparing with the other metals. Therefore, when a UV-curing type coating material or the like is directly applied on such a surface, the resulting coating film may be easily peeled off. Furthermore, other attempts including the addition of inorganic particles, such as those of titanium oxide and zirconium oxide, as a photocatalyst to a polymer material have been conducted in the art. However, there is a problem in that the particles have poor dispersability and are difficult in handling.

Therefore, as a method for improving the surface characteristics of the solid material, for example, the surface thereof may be subjected to a primer treatment or coated with a silane-coupling agent or a titanium-coupling agent dissolved in a solvent.

However, for attaining a desired modifying effect, these conventional methods have some problems in manufacturing steps. For instance, a comparatively large amount of the primer or silane-coupling agent or the like shouldbe required, while consuming much processing time.

Therefore, as an alternative for the primer treatment and the coupling-agent treatment, the methods to be used for improving the surface characteristics of solid materials include a UV-irradiation method, a corona-discharge treatment, a plasma treatment, a method for providing the surface with a functional group, a surface light grafting method, a sandblasting treatment, a solvent treatment, and an acid cromic mixture treatment.

For instance, in JP 5-68934 A, there is disclosed a technology for improvements in wettability and adhesiveness of coating by UV irradiation with a high pressure mercury lamp fabricated from synthetic quartz. Further, U.S. Pat. No. 5,098,618 discloses a method for improving the wettability and adhesiveness of coating by selectively irradiating UV light of 185 nm and 254 nm in wavelength onto the surface of hydrophobic plastics under mixed gas. Also, JP 10-67869 A discloses a method of corona treatment by blowing the gaseous material as well as applying high voltage pulse to the surface of the plastic materials having the low wettability. Furthermore, JP 8-109228 A discloses a method for graft polymerization of a vinyl monomer on the surface of a polyolefin resin or the like after carrying out a surface-activation treatment, such as an ozone treatment, a plasma treatment, a corona treatment, a high-voltage discharging treatment, and a UV irradiation method, on that surface in order to improve dye-affinity.

However, these surface-modification methods cause not only insufficient improvements on surface characteristics but also various other problems including: environmental problems such as contaminated and dangerous working surroundings; work-related problems such as the necessity of washing and waste liquid treatment; and economical problems such as large-scaled and expensive facilities.

On the other hand, as a simple and cheap method for modifying the surface of a solid material, a prolonged flame treatment on the surface of the solid material may be suggested. However, according to the method, the modification of the surface of the solid material, typically wettability and contact-angle characteristics, is insufficient and a problem that the modifying effect of the method cannot last for a long-term exists. Further, as disclosed in JP 9-124810 A, in case of applying the flame treatment onto the surface of the solid material for a long time, a problem that thermal deformation is easily caused exists.

Under the circumstances, DE 0019926 A1 discloses a method for modifying the surface of a solid substrate mainly provided as a metal or glass article, which comprises the steps of: modifying the surface of the solid substrate by at least one oxidizing flame; and modifying the surface of the solid substrate by at least one silicatizing flame. According to the method for modifying the surface of the solid substrate, the surface of the solid substrate may be modified securely and an ink for printing, paint for UV curing and the like may be made to adhere securely.

However, since the modification method disclosed in DE 0019926 A1 uses alkoxysilane alone as a silicon-containing compound, such as tetramethoxysilane (boiling point: 121°C, flash point: 22°C), there is a problem in that a stable modifying effect cannot be obtained for a coating film made of any of various UV-curing resins. Besides, there is another problem in that alkoxysilane compounds have high activity and tends to hydrolyze a general-purpose resin such as polycarbonate. Furthermore, there is another problem in that, since the method also contains an additional oxidizing flame treatment prior to the silicatizing flame treatment, it takes a long time as a whole to carry out these treatments even though a superior modifying effect may be obtained.

Furthermore, JP 2001-500552 A discloses a flame-treatment method for modifying the surface of a polymer substrate. In other words, the flame-treatment method disclosed comprises the step of exposing the polymer substrate to a flame with a combustion aid, a mixture of a fuel and an oxidizing reagent, which contains hexamethyldisiloxane (boiling point: 100-101°C, flash point: -1°C) as a silicon-containing compound.

However, since the method disclosed in JP 2001-500552 A uses hexamethyldisiloxane as a silicon-containing compound, there is a problem in that a stable modifying effect cannot be obtained for a coating film made of any of various UV-curing resins including an epoxy acrylate-based UV-curing resin, an urethaneacrylate-based UV-curing resin, and a polyester acrylate-based UV-curing resin. Besides, the modifying effect due to hexamethyldisiloxane may decline comparatively within a short time.

The present inventors, as a result of their concentrated efforts, have completed the present invention by finding out that, by carrying out a silicatizing flame treatment on the surface of a solid material, a metal material, or the like using a silicon-containing compound having both a specific boiling point and a specific flash point, an excellent modifying effect can be exerted for a coating film made of any of a wide variety of UV-curing resins or the like and the surface of a solid material or the like can be uniformly modified in a sufficient manner even if the step of oxidizing flame treatment is omitted.

In other words, the present invention provides a method for modifying the surface of a solid material and a surface-modified solid material, where the surface of the solid material such as a metal material is modified by efficiently carrying out a silicatizing flame with a silicon-containing compound, thereby exerting an excellent modifying effect even on a coating film made of any of various UV-curing resins or the like.

### SUMMARY OF THE INVENTION

[1] According to an aspect of the present invention, the above-mentioned problems can be solved by providing a method for modifying the surface of a sold material, where the surface of the solid material is wholly or partially blow treated with a flame of a fuel gas that comprises a silicon-containing compound having a flash point of 0 to 100°C and a boiling point of 105 to 250°C.
   In other words, both the flash point and the boiling point of the silicon-containing compound are limited within predetermined ranges, respectively. In addition, the silicon-containing compounds, which can be used in the present invention, include hexamethyl disilazane, vinyl trimethoxy silane, vinyl triethoxy silane, trifluoropropyl trimethoxysilane, trifluoro propyl trichlorosilane, 3-aminopropyl trimethoxysilane, 3-aminopropyl triethoxysilane, and 3-chloropropyl methoxysilane, which may be used independently or in combination of two or more of them. Such a silicon-containing compound allows the surface of the solid material to be uniformly modified. Besides, due to the relationship of the flash point and the boiling point of the silicon-containing compound, the silicon-containing compound partially remains on the surface of the sold material. Therefore, an excellent adhesion strength can be obtained between the solid material and the coating film made of any of materials including an epoxyacrylate-based UV-curing resin, an urethaneacrylate-based UV-curing resin, and a polyesteracrylate-based UV-curing resin.
[2] Another aspect of the present invention is a surface-modified solid material having a wetting index (measured at 25°C) in the range of 40 to 80 dyn/cm attained by wholly or partially blowing the surface of a solid material with a flame of a fuel gas that comprises a silicon-containing compound having a flash point of 0 to 100°C and a boiling point of 105 to 250°C.
   Such a configuration of the surface-modified solid material allows to provide a solid material on which a coating film having an extremrely excellent adhesion strength without paying too much attention on choosing one from various UV-curing paints can be formed in addition to an adhesive generally used in the art.

### BRIEF DESCRIPTION OF THE DRAWINGS

FIG. 1 illustrates the structure of a surface modification apparatus of the present invention.
FIG. 2 illustrates the blow treatment process by flame with a surface modification apparatus of the present invention.
FIG. 3 illustrates the structure of a portable surface modification apparatus of the present invention.
FIG. 4 illustrates the flame blow treatment (1).
FIG. 5 illustrates the flame blow treatment (2).

### DESCRIPTION OF THE PREFERRED EMBODIMENTS

Hereinafter, with reference to the figures, embodiments regarding the method for modifying the surface of a solid material, the surface-modified solidmaterial, and the apparatus for modifying the surface of a solid material of the present invention will be explained in detail.

### [First Embodiment]

The first embodiment is a method for modifying a surface of a solidmaterial wherein the surface of the solidmaterial is subjected to silicatizing flame treatment such that the surface of the solid material is wholly or partially blown with a flame from a fuel gas that comprises a silicon-containing compound having a flash point of 0 to 100°C and a boiling point of 105 to 250°C.

### 1. Solid material

According to the first embodiment, typically, the solid material used may be silicone rubber or fluorine-contained rubber but details thereof will be explained in the second embodiment.

### 2. Fuel Gas

### (1) Silicon-Containing Compound

### (i) Flash Point

It is characteristic for the flash point of the silicon-containing compound (in closed or opened system) to be in a range between 0 and 100°C.

The reason for this is that if the flash point of the silicon-containing compound is below 0°C, the handling may be difficult in storage and the combustion rate may be difficult to adjust. On the other hand, if the flash point of the silicon-containing compound exceeds 100°C, the silicon-containing compound may have a remarkable decrease in mixing property with a flammable gas such as air and a combustion improver, tend to burn incompletely, and cause difficulty in exhibition of an excellent modifying effect on a coating film made of any of various UV-curing resins or the like.

Therefore, the flash point of the silicon-containing compound is preferably in the range of 15 to 90°C, more preferably in the range of 20 to 85°C.

Furthermore, the flash point of the silicon-containing compound may be adjusted not only restricting the structure or kind of the compound itself but also by using an appropriate mixture of the silicon-containing compound with an alcohol compound or the like.

### (ii) Boiling Point

It is characteristics for the boiling point of the silicon-containing compound to be in a range between 105 to 250°C.

The reason for this is that if the boiling point of the silicon-containing compound is below 105°C, the silicon-containing compound may be strongly volatile and difficult to be handled. On the other hand, the boiling point of the silicon-containing compound exceeds 250°C, the silicon-containing compound may have a remarkable decrease in mixing property with an inflammable gas such as air and a combustion improver, tend to burn incompletely, and cause difficulty in uniform modification of the surface of the solid material and in sustained modifying effect for a long time.

Therefore, the boiling point of the silicon-containing compound is preferably in the range of 110 to 220°C, more preferably in the range of 120 to 200°C.

Furthermore, the boiling point of the silicon-containing compound may be adjusted not only restricting the structure or kind of the compound itself but also by using an appropriate mixture of the silicon-containing compound with an alcohol compound or the like.

### (iii) Kinds

The silicon-containing compound used contains, but not specifically limited to, preferably at least one of a nitrogen atom, a halogen atom, a vinyl group, and an amino group in molecule or on the terminal of the molecule.

More concretely, preferable examples of the silicon-containing compound include hexamethyl disilazane (boiling point: 126°C, flash point: 12 to 14°C), vinyl trimethoxysilane (boiling point: 123°C, flash point: 23°C), vinyl triethoxysilane (boiling point: 161°C, flash point: 54°C), trifluoropropyl trimethoxysilane (boiling point: 144°C, flash point 23°C), trifluoropropyl trichlorosilane (boiling point: 113 to 114°C, flash point: 25°C), 3-aminopropyl trimethoxysilane (boiling point: 215°C, flash point: 88°C), 3-aminopropyl triethoxysilane (boiling point: 217°C, flash point: 98°C), and 3-chloropropyl trimethoxysilane (boiling point: 196°C, flash point: 83°C).

The reason of this is that such a kind of the silicon-containing compound allows an improvement in mixing property with a flammable gas and the formation of a silica layer to more uniformly modify the surface of a solid material, and due to the relationship of the boiling point of the silicon-containing compound and the like, facilitates the compound itself to be partially remained on the surface of the solid material, thereby obtaining a more excellent adhesion strength between the solid material and a coating film made of any of various UV-curing resins or the like. In addition, the silicon-containing compound constructed as described above can be provided comparatively more cheaply because of further improvements in shelf life and ability of being filled in a gas cylinder.

In addition, the silicon-containing compound that contains a nitrogen atom and a halogen atom in molecule, such as hexamethyl disilazane, trifluoropropyl trimethoxysilane, trifluoropropyl trichlorosilane, 3-chloropropyltrimethoxysilane or the like has characteristic features of good affinity with an epoxyacrylate- or urethaneacrylate-based UV-curing resin among other resins and easiness to exert an excellent adhesion strength to an adherend. Furthermore, the silicon-containing compound that contains a vinyl group or an amino group on the terminal of a molecule such as vinyltrimethoxysilane, vinyltriethoxysilane, 3-aminopropyl trimethoxysilane, 3-aminopropyl trietoxysilane or the like has characteristic features of good affinity with a polyesteracrylate-based UV-curing resin in particular and is thus facilitated to exert an excellent adhesion with the adherend.

Therefore, an excellent adhesion strength between a coating film made of any of various UV-curing resins and an adherend can be obtained more stably by the use of a mixture of the silicon-containing compound having nitrogen and halogen atoms and the silicon compound having vinyl and amino groups at a ratio of, for example, 10 : 90 to 90 : 10 (by weight ratio).

### (iv) Average Molecular Weight

It is preferable for the average molecular weight of the silicon-containing compound to be within a range of 50 to 1,000 measured by mass spectrum analysis.

The reason for this is that if the average molecular weight of the silicon-containing compound is below 50, the volatility is high and the handling becomes difficult in some cases. On the other hand, if the average molecular weight of the silicon-containing compound is above 1,000, the evaporation by heating and the easy mixing with air and the like becomes difficult in some cases.

Therefore, it is more preferable for the average molecular weight of the silicon-containing compound to be within a range of 60 to 500, and it is even more preferable for the average molecular weight of the silicon-containing compound to be within a range of 70 to 200, measured by mass spectrum analysis.

### (v) Density

It is preferable for the density of the silicon-containing compound in liquid state to be within a range of 0.3 to 1.5 g/cm³.

The reason for this is that if the density of the silicon-containing compound is below 0.3 g/cm³ the handling becomes difficult and accommodation in aerosol cans becomes a problem in some cases. On the other hand, if the densityof the silicon-containing compound in liquid state is above 1.5 g/cm³, the evaporation becomes difficult and in case of accommodation in aerosol cans, a state of complete separation with the air or the like can occur in some cases.

Therefore, it is more preferable for the density of the silicon-containing compound to be within a range of 0. 9 to 1.3 g/cm³, and it is even more preferable for the density of the silicon-containing compound to be within a range of 0.95 to 1.2 g/cm³.

### (vi) Added Amount

When the total amount of the fuel gas is 100 mol%, it is preferable for the added amount of the silicon-containing compound to be within a range of 1 x 10⁻¹⁰ to 10 mol% of the total amount of fuel gas.

The reason for this is that if the density of the silicon-containing compound is below 1 x 10⁻¹⁰ mol%, the modifying effect of solid materials does not appear in some cases. On the other hand, if the density of the silicon-containing compound is above 10 mol%, the mixing properties of the silicon-containing compound with air and the like decrease, leading to imperfect combustion of the silicon-containing compound in some cases.

Therefore, when the total amount of the fuel gas is 100 mol%, it is more preferable for the density of the silicon-containing compound to be within a range of 1 x 10⁻⁹ to 5 mol%, and it is even more preferable for the density of the silicon-containing compound to be within a range of 1 x 10⁻⁸ to 1 mol%.

### (2) Inflammable Gas

It is preferable to add an inflammable gas or a combustible gas into the fuel gas to allow easy control of the flame temperature. Hydrocarbon gases such as propane gas and natural gas, hydrogen, oxygen, air and the like may be given as such inflammable gases or combustible gases. In case of using inflammable gas accommodated in aerosol cans, it is preferable to use propane gas, compressed air and the like.

When the total amount of the fuel gas is 100 mol%, it is preferable for the contained amount of inflammable gas to be within a range of 80 to 99.9 mol% of the total amount of fuel gas.

The reason for this is that if the contained amount of inflammable gas is below 80 mol %, the mixing properties of the silicon-containing compound and air and the like decrease, leading to imperfect combustion of the silicon-containing compound in some cases. On the other hand, if the contained amount of inflammable gas is above 99.9 mol% , the modifying effect of solid materials does not appear in some cases.

Therefore, when the total amount of the fuel gas is 100 mol%, it is more preferable for the contained amount of inflammable gas to be within a range of 85 to 99 mol %, and it is even more preferable for the contained amount of inflammable gas to be within a range of 90 to 99 mol%.

### (3) Carrier Gas

It is preferable to also add a carrier gas to evenly mix the silicon-containing compound into the fuel gas. In other words, it is preferable to premix the silicon-containing compound with a carrier gas, and to then mix it into the inflammable gas such as the air stream and the like.

The reason for this is as follows: By adding a carrier gas, even when using a silicon-containing compound with a relatively high molecular weight and is difficult to transport, it may be evenly mixed into the air stream. In other words, by adding a carrier gas, the silicon-containing compound becomes easy to burn and the surface modification of the solid material may be then carried out evenly and sufficiently.

As such a preferable carrier gas, it is preferable to use the same type of gas as the inflammable gas, for example, air and oxygen. Alternatively, hydrocarbon gases such as propane gas, natural gas and the like may be given.

### (4) Additives

### (i) Kinds 1

It is preferable to add at least one compound selected from the group consisting of an alkylsilane compound, an alkoxysilane compound, an alkyltitanium compound, an alkoxytitanium compound, an alkylaluminum compound, and an alkoxyaluminum compound with a boiling point of below 100°C. into the fuel gas as a modification enhancer.

The reason for this is as follows: By adding a modification enhancer with excellent mutual solubility to the silicon-containing compound such as an alkylsilane compound having a boiling point of more than 100°C, even when using a compound with a relatively low boiling point, difficulty of the fuel gas handling due to the boiling point of the silicon-containing compound being low may be improved and as a consequence thereof the surface modification effect of the solid material may be further increased. Furthermore, another reason is that the addition of such a modification enhancer makes the adjustment of flame color easy to confirm complete burning, together with the silicon-containing compound.

Furthermore, when the total amount of the silicon-containing compound is 100 mol%, it is preferable for the added amount of the modification enhancer to be within a range of 0.01 to 50 mol%.

The reason for this is as follows: If the added amount of the silicon-containing compound is below 0.01 mol%, the addition effect of the modification enhancer does not appear in some cases. On the other hand, if the added amount of the modification enhancer is above 50 mol%, imperfect combustion of the silicon-containing compound occurs in some cases.

Therefore, when the total amount of the silicon-containing compound is 100 mol%, it is more preferable for the added amount of the modification enhancer to be within a range of 0.1 to 30 mol%, more preferably within a range of 0.5 to 20 mol%.

### (ii) Kinds 2

Furthermore, it is preferable to add an alcohol compound into the fuel gas together with the above-mentioned silicon-containing compound.

The reason for this is as follows: The alcohol compound added may be uniformly dissolved with the silicon-containing compound to facilitate the adjustment of the boiling point and flash point of the mixture containing the silicon-containing compound. In addition, the addition of such an alcohol compound makes the adjustment of flame color easy to confirm complete burning, together with the silicon-containing compound.

Here, the alcohol compounds include methyl alcohol, ethyl alcohol, propyl alcohol, butyl alcohol, benzyl alcohol and the like, which may be used independently or in combination of two or more of them.

In addition, the amount of the alcohol compound added together with the silicon-containing compound is preferably in the range of 0.01 to 30 mol% when the total amount of the silicon-containing compound is 100 mol%.

The reason of this is as follows: If the added amount of the alcohol compound is below 0.01 mol%, the boiling point and flash point of the mixture are difficult to be adjusted in some cases. On the other hand, if the added amount of the alcohol compound exceeds 30 mol%, the modifying effect on the surface of the solid material cannot be exerted in some cases.

### 3. Flame

### (1) Temperature

It is preferable for the flame temperature to be within a range of 500 to 1,500°C.

The reason for this is as follows: If the flame temperature is below 500°C, it becomes difficult to prevent effectively imperfect combustion of the silicon-containing compound in some cases. On the other hand, if the value of the flame temperature is above 1, 500°C, the solid material subject to surface modifying will be deformed or damaged in some cases, and the types of solid materials that may be used will be excessively limited in some cases.

Therefore, it is more preferable for the value of the flame temperature to be within a range of 550 to 1,200°C, and it is even more preferable for the value of the flame temperature to be within a range of 600 to 900°C.

The flame temperature may be appropriately adjusted according to the type of fuel gas, the fuel gas throughput or the type and amount of silicon-containing compound added to the fuel gas.

### (2) Treatment Period

It is preferable for the flame treatment period (blow period) to be within a range of 0.1 to 100 seconds.

The reason for this is as follows: If the value of the flame treatment period is below 0.1 seconds, the modifying effect of the silicon-containing compound does not appear evenly in some cases. On the other hand, if the value of the flame treatment period is above 100 seconds, the solid material subject to surface modifying will be heat-deformed or heat-damaged in some cases, and the types of solid materials that may be used will be excessively limited in some cases.

Therefore, it is more preferable for the value of the flame treatment period to be within a range of 0.3 to 30 seconds, and it is even more preferable for the value of the flame treatment period to be within a range of 0.5 to 20 seconds.

### 4. Process of Forming Coating Film

Furthermore, for carrying out the method of modifying the surface of a solid material in accordance with the first embodiment, the method may preferably contain a process of forming a coating film as a subsequent step. In other words, it is preferable to form a coating film made of UV-curing paint.

The process of forming a coating film is carried out such that a coating film made of an epoxyacrylate-based UV-curing paint, urethaneacrylate-based UV-curing paint, or polyesteracrylate-based UV-curing paint and the number of pieces of the coating film, which were peeled off from the solid material, may be preferably 10 or less per 100 grids in a cross-cut test in accordance with JISK-5400.

In other words, the conventional silicatizing flame treatment could exert a predetermined modifying effect on one of coating films made of epoxyacrylate-based UV-curing paint, urethaneacrylate-based UV-curing paint, and polyesteracrylate-based UV-curingpaint. However, it was difficult to exert the predetermined effect on all of the coating films. Therefore, in the first embodiment, the method for modifying the surface of a solid material further includes the step of forming a coating film. The method can be quantitatively performed in a reliable manner by clarifying the standard of the predetermined modifying effect by determining the number of pieces of the coating film, which are peeled off, by the cross-cut test in accordance with JIS K-5400.

By the way, the epoxyacrylate-based UV-curing paint is preferably UV-curing paint basically constructed of an epoxyacrylate oligomer having a polar group such as a phosphate group and the like, an acrylate monomer, and a curing agent.

In addition, the urethaneacrylate-based UV-curing paint is preferably UV-curing paint basically constructed of an urethane acrylate oligomer, an acrylate monomer, and a curing agent.

Furthermore, the polyetsteracrylate-based UV-curing paint is preferably UV-curing paint basically constructed of a polyester acrylate oligomer, an acrylate monomer, and a curing agent.

### [Second Embodiment]

The second embodiment is a surface-modified solid material having a wetting index of 40 to 80 dyn/cm (measuring temperature 25°C) attained by subjecting the surface of the solidmaterial wholly or partially to a blow treatment with a flame of a fuel gas that comprises a silicon-containing compound having a flash point of 0 to 100°C and a boiling point of 105 to 250°C.

### 1. Solid Material

### (1) Rubber

Furthermore, for constructing the surface-modified solid material, the solid material may be at least one of rubber types selected from the group consisting of: silicone rubber, fluorine-contained rubber, natural rubber, neoprene rubber, chloroprene rubber, urethane rubber, acryl rubber, olefin rubber, styrene-butadiene rubber, acrylonitrile-butadiene rubber, ethylene-propylene rubber, ethylene-propylenediene rubber, butadiene rubber, butyl rubber, styrene type thermoplastic elastomer, and urethane type thermoplastic elastomer.

Among these rubber types, an excellent modifying effect may be obtained according to the surface modification of the present invention with large wetting angle of contact, low wetting index silicone rubber, fluorine-contained rubber, olefin rubber, ethylene-propylene rubber. Therefore, it becomes easy to print numbers, letters, and the like on the surface of stain-proof rubber and dirt covers such as silicone rubber and fluorine-contained rubber.

### (2) Resin

Furthermore, for constructing the surface-modified solid material, examples of the solid material may include: a polyethylene resin (high density polyethylene, medium density polyethylene, low density polyethylene, high pressure polyethylene, medium pressure polyethylene, low pressure polyethylene, linear low density polyethylene, branch low density polyethylene, high pressure linear low density polyethylene, super molecular weight polyethylene, cross-linked polyethylene), polypropylene resin, denatured polypropylene resin, polymethyl pentene resin, polyester resin, polycarbonate resin, polyether sulfone resin, polyacryl resin, polyether ether ketone resin, polyimide resin, polysulfone resin, polystyrene resin, polyamide resin, and polyphenylen sulfide resin, ethylene-tetrafluoroethylen copolymer, polyvinyl fluoride resin, atetrafluoroethylene-perfluoroether copolymer, tetrafluoroethylene-hexafluoropropylene copolymer, polytetrafluoroethylene resin, polyvinylidene fluoride resin, polytrifluorochloroethylene resin, and ethylene-trifluorochloroethylene copolymer.

Among these resin types an excellent modifying effect may be obtained according to the surface modification of the present invention with large wetting angle of contact, a low wetting index polyethylene resin, polypropylene resin, polyester resin, polycarbonate resin, polytetrafluoroethylene resin, and the like.

Therefore, the printing of letters and patterns onto films made of a polyethylene resin or a polypropylene resin, or onto receptacles made of polyester, the firm adhering of aluminum reflecting film to compact disk boards made of a polycarbonate resin and also the printing of numbers, letters, and the like onto dirt-repellent material made of a polytetrafluoroethylen resin become possible.

### (3) Thermosetting Resins

Furthermore, for constructing the surface-modified solid material, other examples of the solid material may include an epoxy resin, a phenol resin, a cyanate resin, an urea resin, and a guanamine resin. Among these thermosetting resins, in case of an epoxy resin for example, laser-marking on semiconductor plastic encapsulation resins maybe carried out easily according to the surfacemodification of the present invention.

### (4) Metal Materials

Furthermore, for constructing the surface-modified solid material, other examples of the solid material may include metal materials such as aluminum, magnesium, stainless steel, nickel, chromium, tungsten, gold, copper, iron, silver, zinc, tin, and lead, which may be used independently or in combination of two or more of them.

For instance, aluminum is widely used as a light metal, but shows several problems in that it tends to form a surface oxidation layer, which facilitates peeling-off of UV curing paint or the like even when applied directly. Now, by carrying out silicatizing flame treatment or the like on the aluminum surface, the peeling-off of UV curing paint or the like even when applied directly may be effectively prevented.

Further, magnesium as a recyclable metal is widely used in recent years in personal computer bodies and son on, but shows the problems of easy peeling-off (detachment) of UV curing paint and the like even when applied directly due to poor surface smoothness. Now, by carrying out silicatizing flame treatment or the like on the magnesium surface, the peeling-off (detachment) of UV curing paint or the like even when applied directly may be effectively prevented and colored magnesium sheets or the like may be then provided.

Further, currently, when gold bumps or solder bumps of semiconductor elements are electrically connected to film carrier and circuit board in a high temperature and high moisture environment, problems appear with occurring surface detachment. Now, by carrying out silicatizing flame treatment or the like on either the gold bumps or solder bumps, or the film carrier or circuit board, the surface detachment may be effectively prevented.

Further, the silicatizing flame treatment is a treatment using a flame that comprises a silicon-containing compound which enables the forming of a silicon oxide layer on the whole substrate substance or on part of it by blazing heat decomposition of the substrate substance.

### (5) Inorganic Materials Other Than Metal Materials

Preferable inorganic materials other than metal materials, which can constitute the solid materials of the invention, include titaniumoxide, zirconiumoxide, zincoxide, indiumoxide, tinoxide, silica, talc, calcium carbonate, lime, zeolite, glass, and ceramic, which may be used independently or in combination of two or more of them.

### (6) Form

Exemplified forms of the solid material to be subjected to the treatment include, but not specifically limited to, those having plane structures, such as a board shape (a plate shape), a sheet shape, a film shape, a tape shape, a strip shape, a panel shape, and a strap shape, as well as those having three-dimensional structures, such as a cylinder shape, a column shape, a sphere shape, a block shape, a tube shape, a pipe shape, a concavo-convex shape, a membrane shape, a fiber shape, a fabrics shape, and a bundle shape.

For example, by carrying out silicatizing flame treatment or the like on fiber glass or carbon fiber, the surface thereof may be modified and activated, and the fibers may be distributed evenly in a matrix resin such as epoxy resin and a polyester resin. Therefore, excellent mechanical strength, heat resistance and the like may be achieved in FRP and CFRP.

Further, as such a form of matter subject to treatment, it is also preferable for it to be of a composite structure such as of a solid material combined with a metal part, ceramic part, glass part, paper part, wooden part, and the like.

For example, by carrying out silicatizing flame treatment and the like on the inner side of a metal pipe or a ceramic pipe, the surface is modified and activated and a layered pipe with an extremely strong resin liner may be obtained.

Further, by carrying out silicatizing flame treatment and the like wholly or in part of the surface of a board, that is a plastic board or glass board, such as a liquid crystal display device, organic electro luminescence device, plasma display device, or a CRT, an organic film such as a color filter, a deflection sheet, a light scattering sheet, a black matrix sheet, an anti-reflection film, or an anti-static film may be laminated extremely evenly and firmly.

### 2. Fuel Gas

The description is omitted here because the same silicon-containing compounds and inflammable gases as those described in the first embodiment may be used in the present embodiment.

### 3. Flame

The description is omitted here because the same flame temperatures and treatment periods as those described in the first embodiment may be used in the present embodiment.

### 4. Wetting Index (Surface Energy)

### (1) After Surface Modification

Further, it is preferable for the wetting index of the surface-modified solid material to be in a range between 40 and 80 dyn/cm (measuring temperature 25°C).

The reason for this is that if the value of the wetting index of the solid material is below 40 dyn/cm, easy adhesion, printing, painting and the like becomes difficult in some cases. On the other hand, if the value of the wetting index of the solid material is above 80 dyn/cm, the surface treatment is overly carried out and the solid material is heat-damaged in some cases.

Therefore, it is more preferable for the value of the wetting index of the surface-modified solid material to be in a range between 45 and 75 dyn/cm, and it is even more preferable for the value to be in a range between 50 and 70 dyn/cm.

Here, the wetting index (dyn/cm) of the solid material before the surface modification and the wetting index (dyn/cm) of the solid material after the surface modification (for 0.5 seconds) were measured using a standard solution at 25°C. The results of the measurements are listed as measurement examples in Table 1.

### (2) Before Surface Modification

Further, it is preferable for the value of the wetting index of the solid material before surface modification (before surface treatment) to be in a range between 20 and 45 dyn/cm (measuring temperature 25°C).

The reason for this is that if the wetting index of the solid material is below 20 dyn/cm, the surface treatment needs to be carried out over a long period, so that the solid material is heat-damaged in some cases. On the other hand, if the value of the wetting index of the solidmaterial is above 45 dyn/cm, efficient surface treatment by flame becomes difficult in some cases. For example, the wetting index of polyethylene resin before modification treatment is about 40 dyn/cm, and although it also depends on the silicatizing flame treatment temperature and the like, with about 1 second of silicatizing flame treatment, the wetting index may be increased to about 60 dyn/cm or more.

Therefore, it is more preferable for the value of the wetting index of the solid material before surface modification (before surface treatment) to be in a range between 25 and 38 dyn/cm (measuring temperature: 25°C), and it is even more preferable for the value to be in a range between 28 and 36 dyn/cm.

### 5. Contact Angle

### (1) After Surface Modification

Further, it is preferable for the contact angle of the surface-modified solid material, measured using water, to be in a range between 0.1 and 30 ° (measuring temperature: 25°C).

The reason for this is that if the value of the contact angle of the solid material is below 0.1°, the surface treatment is overly carried out, so that the solid material is heat-damaged in some cases. On the other hand, if the value of the contact angle of the solid material is above 30°, easy adhesion, printing, painting, and the like becomes difficult in some cases.

Therefore, it is more preferable for the value of the contact angle of the surface-modified solid material, measured using water, to be in a range between 0.5 and 20° (measuring temperature 25°C), and it is even more preferable for the value to be in a range between 1 and 10°.

### (2) Before Surface Modification

Further, it is preferable for the value of the contact angle, measured using water, of the solid material before surface modification (before surface treatment) to be in a range between 50 and 120° (measuring temperature: 25°C).

The reason for this is that if the contact angle of the solid material is below 50°, efficient surface treatment by flame becomes difficult in some cases. On the other hand, if the value of the contact angle of the solid material is above 120°, the surface treatment needs to be carried out over a long period of time, so that the solid material is heat-damaged in some cases. For example, the contact angle of polytetrafluoroethylene resin before modification treatment is about 108°, and although it also depends on the silicatizing flame treatment temperature and the like, with about 1 second of silicatizing flame treatment, the contact angle may be decreased to approximately below 20°.

Therefore, it is more preferable for the value of the contact angle of the solid material before surface modification (before surface treatment), measured using water, to be in a range between 60 and 110°, and it is even more preferable for the value to be in a range between 80 and 100°.

### 6. Coating Film

The surface of the solid material subjected to the predetermined silicatizing flame treatment is preferably provided with any of coating films (about 5 to 500 µm in thickness) consisting of epoxyacrylate-based UV-curing paint, urethaneacrylate-based UV-curing paint, and polyesteracrylate-based UV-curing paint.

The reason of this is that the solid material of the second embodiment does not require any strict selection of the kind of paint, the coating film having an excellent adhesion strength can be formed by a UV-curing treatment on the solid material, and hence the commercial value or the like of the solid material can be enhanced quickly at a low price.

### [Third Embodiment]

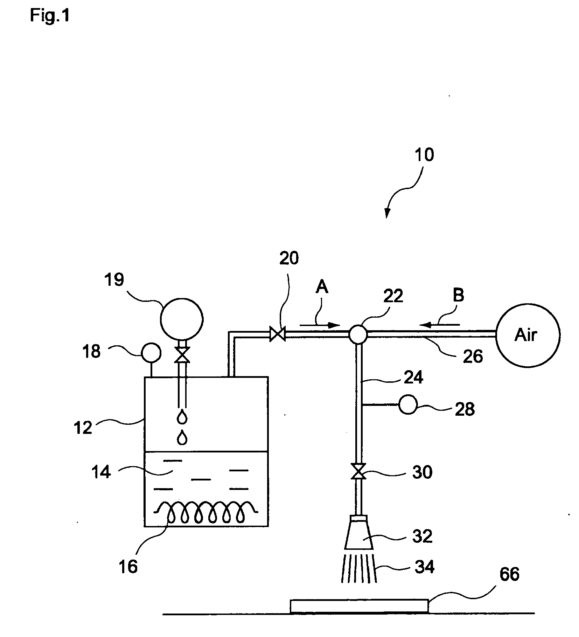

The third embodiment is an apparatus 10 for modifying a surface of a solid material, as shown in FIG. 1, containing a storage tank 12 for storing a silicon-containing compound 14 having a flash point of 0 to 100°C and a boiling point of 105 to 250°C, a transfer part 24 for transferring the fuel gas and an outlet part 32 for letting out the fuel gas flame 34 for blow treatment.

### 1. Storage Tank

As shown in Fig. 1, preferably, the storage tank may comprise a first storage tank 12 having a heating device 16, for storing the silicon-containing compound 14, and a second storage tank (not shown) for storing an inflammable gas such as compressed air and the like. In this example, the heating device 16 is mounted on the bottom part of the first storage tank 12. The heating device 16 may comprise a heater and a heat transfer line, or may comprise a heating board or the like that is connected to a heat exchanger, for evaporating the silicon-containing compound 14 in a liquid state at ambient temperature and atmospheric pressure.

When the solid material is surface-treated, it is preferable for the silicon-containing compound 14 in the first storage tank 12 to be heated by the heating device 16 to a predetermined temperature, and in evaporated state to be mixed with the inflammable gas (e.g., air) to form the fuel gas.

Furthermore, because the amount of silicon-containing compound included in the fuel gas is of extreme importance, the amount of this silicon-containing compound should also be indirectly controlled. It is therefore preferable to monitor the silicon-containing compound's steam pressure (or the silicon-containing compound amount) by providing a pressure gauge (or a liquid surface level gauge) 18 in the first storage tank 12.

### 2. Transfer Part

The transfer part is usually a pipe structure, and as shown in FIG. 1, preferably contains a mixing chamber 22 for forming the fuel gas by evenly mixing the silicon-containing compound 14 transferred from the first storage tank 12 and the inflammable gas (air) transferred from the second storage tank (not shown), as well as a valve and throughput gauge to control the throughput, or a pressure gauge 28 to control the fuel gas pressure.

Further to mixing the silicon-containing compound and inflammable gas evenly, a mixing pump in the mixing chamber 22 in order to strictly control the throughput and an obstruction board or the like to prolong the retention period are preferably included.

### 3. Outlet Part

### (1) Structure

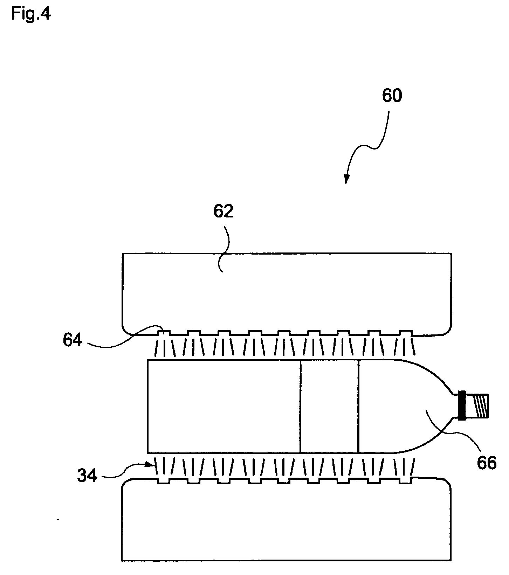

The outlet part, as shown in FIG. 1, preferably comprises a burner 32 for blow treatment of the solid material subjected to treatment with a flame 34 obtained by burning the fuel gas transferred from the transfer part 24. Exemplified types of the burner include, but not specifically limited to, a premixing type burner, a diffusion type burner, a partial-premixing type burner, a spraying burner, anevaporationburner, a pulverized coal burner and the like. Further, the form of the burner may be, but not specifically limited to, as shown in FIG. 1, a fan-type as a whole spreading toward the tip portion, or as shown in FIG. 4, the form of the burner may be a rectangle with jet nozzles 64 being aligned along the lateral sides.

### (2) Arrangement

It is preferable to determine the arrangement of the outlet part, In other words, the layout of the burner taking into consideration the ease of surface modification of the solid material subject to treatment.

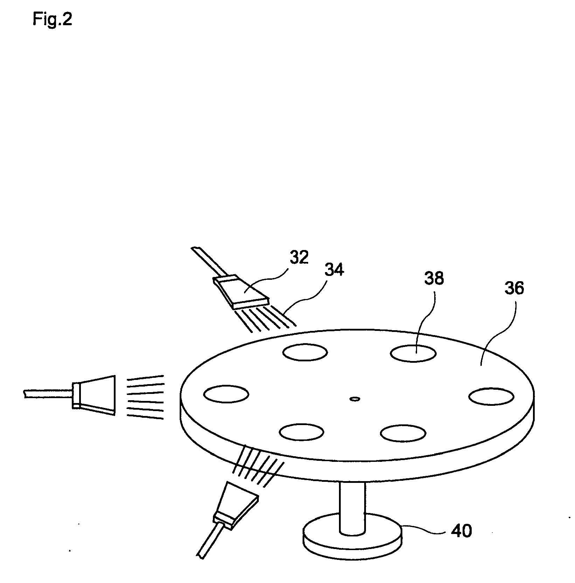

For example, it is preferable to arrange it along a circular or elliptical shape as shown in FIG. 2, but it is also preferable to arrange it adjacent to both sides of a solid material subject to treatment as shown in FIG. 4.

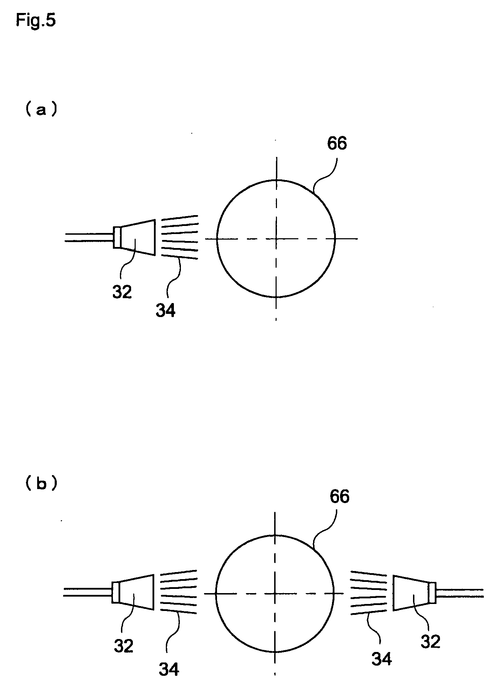

Further, it is also preferable to arrange it at a prescribed distance from one of the sides of a solid material subject to treatment as shown in FIG. 5a, but it is also preferable to arrange it at a prescribed distance each from both sides of a solid material subject to treatment as shown in FIG. 5b.

### 4. Form

### (1) Stationary Type

The apparatus for modifying a surface of a solid material preferably comprises, for example, as shown in FIG. 1, a storing tank 12, a transfer part 24 for transferring the fuel gas, and an outlet part 32 for blow treatment with a flame obtained from the fuel gas, and the respective parts are installed. As shown in FIG. 2, the solid material, mounted on a fixing jig 38 on a rotation table 36, is preferably blow treated with a flame 34 from the outlet part 32 with changing its position of the solid material subject to treatment and rotating the solid material by the fixing jig 38.

According to the stationary type of apparatus 10 for modifying the surface of the solid material, the surface of the solid material subject to treatment may be modified in large scale and efficiency.

### (2) Portable Type

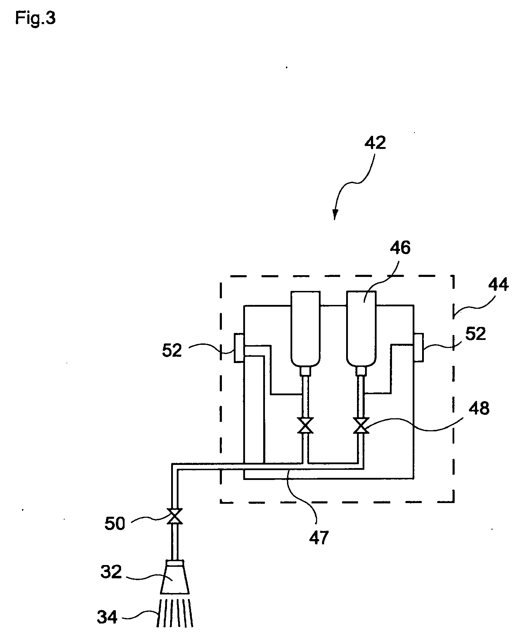

The apparatus for modifying a surface of a solid material 42 is preferably a portable type as shown in FIG. 3. That is, as shown in the region surrounded by the dotted lines, the apparatus comprises a cartridge-type storing tank 46, a laying pipe 47, a box 44 provided with a throughput gauge and a pressure gauge, wherein the laying pipe 47 comprises a burner 32 in its tip portion. According to the above construction, by transferring the box 44 timely, both the solid substance subject to treatment being placed outdoors and the solid substance subj ect to treatment having a large size and capacity may be surface modified easily.

In order to carry the box easily, the box 44 is preferably provided with a handle or a cord on its upper portion, and the weight of the box 44 is preferably 20 kg or less.

### 5. UV-Irradiation Apparatus

A UV-irradiation apparatus may preferably be provided in the neighborhood of or in parallel with the apparatus for modifying the surface of a solid material. In other words, the UV-irradiation apparatus quickly forms any of coating films made of an epoxyacrylate-based UV-curing paint, an urethaneacrylate-based UV-curing paint, and polyesteracrylate-based UV-curing paint onto the surface of a solid material subjected to the predetermined silicatizing flame treatment without any strict selection of the kind of target paint.

### [EXAMPLE 1]

### 1. Surface Modification of a Solid material

An aluminum plate having a thickness of 2 mm (A1 plate, 10 cm x 5 cm) and a polypropylene resin plate having a thickness of 2 mm (PP plate, 10 cm x 5 cm) were prepared, respectively. Then, each of these plates was subjected to a silicatizing treatment for 0.2 seconds per unit area (50 cm²) using a portable surface-modifying apparatus shown in FIG. 3.

As a fuel gas, a mixed gas containing 0.01 mol% of hexamethyl disilazane and the remainder, 99.99 mol% of compressed air, in a cartridge was used.

### 2. Evaluation of Solid Material

### (1) Wetting index

The wetting index of a surface modified plate was measured using a standard liquid. Further, the wetting index of the plate before surface modification was measured in the same way.

### (2) UV Paint Properties

After screen-printing an epoxyacrylate-based UV-curing paint (Type 1), urethaneacrylate-based UV-curing paint (Type 2), and polyesteracrylate-baed UV-curing paint (Type 3) onto the respective surface-modified plates, 300 mJ/cm² of UV rays were irradiated with an UV irradiation apparatus and then evaluated on the basis of the following criteria, while the UV paint properties to the respective plates before surface modification were also measured in the same way:
Very good: According to the cross-cut adhesion test of 100 pieces (JIS Standard), no piece was peeled off.
Good: According to the cross-cut adhesion test of 100 pieces (JIS Standard), 1 or 2 piece(s) was(were) peeled off.
Fair: According to the cross-cut adhesion test of 100 pieces (JIS Standard), 3 to 10 pieces were peeled off.
Bad: According to the cross-cut adhesion test of 100 pieces (JIS Standard), more than 11 pieces were peeled off.

### [Examples 2 to 7]

In Examples 2 to 7, as shown in Table 1, surface-modified solid materials with different modifying agents were evaluated in the same way as that of Example 1.

### [Comparison Example 1]

The surface of a solid material was modified and the evaluation of the solid material was then carried out just as in the case with comparison example 1, excepting that a mixed gas of compressed air with hexamethyldisiloxane was used instead of the mixed gas of compressed air with hexamethyldisilazane of Example 1.

**Table 1**

| | Solid material | Modifying agent | Wetting index (dyn/cm) | | UV-paint properties | | |
|---|---|---|---|---|---|---|---|
| | | | Before treatment | After treatment | Type1 | Type 2 | Type3 |
| Example 1 | Al | HMDN | 34 | >72 | very good | very good | good |
| | PP | | 30 | >72 | very good | very good | good |
| Example 2 | Al | VTMS | 34 | >72 | fair | good | very good |
| | PP | | 30 | >72 | fair | very good | very good |
| Example 3 | Al | TFTM | 34 | >72 | very good | very good | good |
| | PP | | 30 | >72 | very good | very good | good |
| Example 4 | Al | ClTM | 34 | >72 | very good | very good | good |
| | PP | | 30 | >72 | very good | good | good |
| Example 5 | Al | HMDN /ETA | 34 | >72 | very good | very good | good |
| | PP | | 30 | >72 | very good | very good | good |
| Comparative Example 1 | Al | HMDS | 34 | >72 | bad | fair | good |
| | PP | | 30 | >72 | bad | fair | good |
| Comparative Example 2 | Al | TMS | 34 | >72 | bad | fair | good |
| | PP | | 30 | >72 | bad | fair | good |

| | | | | | | | |
|---|---|---|---|---|---|---|---|
| *HMDN: hexamethyldisilazane | | | | | | | |
| *VTMS: vinyltrimethoxysilane | | | | | | | |
| *HMDN/ETA: hexamethyldisilazane/ethanol | | | | | | | |
| *TFTM: trifluoropropyl trimethoxysilane hex | | | | | | | |
| *ClTM: 3-chloropropyl trimethoxysilane | | | | | | | |
| *HMDS: hexamethyldisiloxane | | | | | | | |

### [Examples 6 to 7 and Comparative Examples 3 to 4]

In Example 6, a silicatizing flame treatment using hexamethyldisilazane (HMDN) was carried out in the same way as that of Example 1 and then subjected to evaluation of the wetting index and UV-paint property (Type 2), while the rest period was changed to 2 weeks and to 4 weeks, respectively.

In Examples 7 and 8, a silicatizing flame treatment was carried out in the same way as that of Example 6, excepting that trifluoropropyl trimethoxysilane (TFTM) and 3-chloropropyl trimethoxysilane (ClTM) were used instead of hexamethyldisilazane. Subsequently, the wetting index and UV-paint property (Type 2) were evaluated, while the rest period was changed in the same way as that of Example 6.

Furthermore, in Comparative Example 3, after carrying out a silicatizing flame treatment using hexamethyldisiloxane, the wetting index and UV-paint property (Type 2) were evaluated, while the rest period was changed in the same way as that of Example 6. Furthermore, in Comparative Example 4, a corona treatment was carried out instead of the silicatizing flame treatment. Subsequently, the wetting index and UV-paint property (Type 2) were evaluated, while the rest period was changed in the same way as that of Example 6.

**Table 2**

| | Solid material | Modification treatment | Wetting index (dyn/cm) | | UV paint property (Type 2) | |
|---|---|---|---|---|---|---|
| | | | 2 week | 4 week | 2 week | 4 week |
| Example 6 | PP | HMDN 0.2 seconds | 70 | 70 | very good | good |
| Example 7 | PP | TFTM0.2 seconds | 70 | 70 | very good | very good |
| Example 8 | PP | ClTM 0.2 seconds | 70 | 70 | good | good |
| Comparative Example 3 | PP | HMDS 0.2 seconds | 60 | 57 | very good | fair |
| Comparative Example4 | PP | Corona treatment/60 seconds | 30 | 30 | bad | bad |

### INDUSTRIAL APPLICABILITY

As stated above, according to the method for modifying the surface of a solid material in connection with the present invention, a silicatizing flame treatment is carried out by blowing a flame of a fuel gas containing a specific silicon-containing compound onto the solid material. Therefore, the surface-modification method for the solid material, which is capable of exerting an excellent modifying effect even on any of coating films made of various UV-curing resins and so on, and a surface-modified solid material can be obtained.

Accordingly, it becomes possible to form any of coating films made of various UV-curing resins and so on, which had been impossible in the art, on the surface-modified solid material of the invention, for example, even on the representative poorly adhesion materials including silicone rubber, fluorine-contained rubber, olefin resin, and polyester resin, as well as metals such as stainless steel, magnesium or the like.

## Claims

1. A method for modifying a surface of a solid material, comprising:
carrying out a silicatizing treatment on the surface of the solid material by wholly or partially blowing a flame of a fuel gas that contains a silicon-containing compound having a flash point of 0 to 100°C and a boiling point of 105 to 250°C onto the surface of the solid material.

2. The method according to claim 1, wherein
the silicon-containing compound has at least one of a nitrogen atom, a halogen atom, a vinyl group, and an amino group in molecule or on a terminal of the molecule.

3. The method according to claim 1 or 2, wherein
the silicon-containing compound is selected from the group consisting of hexamethyldisilazane, vinyltrimethoxysilane, vinyltriethoxysilane, trifuloropropyl trimethoxysilane, trifluoropropyl trichlorosilane, 3-aminopropyl trimethoxysilane, 3-aminopropyl triethoxysilane, and 3-chloropropyl trimethoxysilane, which is used independently or in combination of two or more of them.

4. The method according to any one of claims 1 to 3, wherein
the silicon-containing compound is a mixture of a silicon-containing compound containing a nitrogen atom and a halogen atom in molecule with a silicon-containing compound containing a vinyl group or an amino group on the terminal of the molecule.

5. The method according to any one of claims 1 to 4, further comprising:
adding an alcohol compound to the silicon-containing compound, wherein
the amount of the alcohol compound added is in the range of 0.01 to 30 mol% when the total amount of the silicon-containing compound is defined as 100 mol%.

6. The method according to any one of claims 1 to 5, wherein
the content of the silicon-containing compound in the fuel gas is in the range of 1 x 10⁻¹⁰ to 10mol% when the total amount of the fuel gas is defined as 100 mol%.

7. The method according to any one of claims 1 to 6, wherein
the silicon-containing compound is in a vapor-liquid equilibrium state, and
a gaseous part of the silicon-containing compound is mixed in the fuel gas and then combusted.

8. The method according to any one of claims 1 to 7, further comprising:
a UV-curing step as a step subsequent to the step of modifying the surface of the solid material, wherein
a coating film made of UV-curing paint is formed on a surface-modified solid material.

9. The method according to claim 8, wherein,
in a cross-cut adhesion test in accordance with JIS K-5400, the number of pieces of the coating film made of any of epoxyacrylate-based UV-curing paint, urethaneacrylate-based UV-curingpaint, and polyesteracrylate-based UV-curing paint, which are peeled off from their corresponding grids, is 10 or less per 100 grids.

10. A surface-modified solid material, having a wetting index of 40 to 80 dyn/cm (measured at 25°C) obtained by carrying out a silicatizing flame treatment on a surface of a solid material by wholly or partially blowing a flame of a fuel gas that contains a silicon-containing compound having a flash point of 0 to 100°C and a boiling point of 105 to 250°C onto the surface of the solid material.

11. The surface-modified solid material according to claim 10, wherein
the wetting index of the solid material before the surface treatment is in the range of 20 to 45 dyn/cm (measured at 25°C).

12. The surface-modified solid material according to claim 10 or 11, wherein
a coating film made of UV-curing paint is formed on the surface-modified material.
